# EUROPEAN PATENT APPLICATION

(11) **EP 1 182 584 A2**
(43) Date of publication of application: **27.02.2002**
(21) Application number: 01119953.6
(22) Date of filing: 17.08.2001
(51) Int. Cl.: G06F 17/30, G11B 27/32

(54) **Method and apparatus for video skimming**

(30) Priority: 19.08.2000 KR 2000048036; 22.09.2000 KR 2000055886
(71) Applicant: LG ELECTRONICS INC., Seoul (KR)
(72) Inventor: Jun, Sung Bae, Seoul (KR); Yoon, Kyoung Ro, Kangnam-ku, Seoul (KR); Kang, Bae Guen, Seoul (KR); Bae, So Young, Goyang-si, Kyounggi-do (KR); Yu, Jae Shin, Gwanak-ku, Seoul (KR)
(74) Representative: Popp, Eugen, Dr.

(57) **Abstract**

The present invention relates to a system for searching and browsing multimedia, and more particularly, to a video skimming method and apparatus which is capable of fully understanding the full content of video within a short time and rapidly moving to a desired portion by skimming the content of the video based on scenes and shots formed by shot clustering and shot segmentation, selecting scenes to be reproduced and scenes to be skipped when performing video skimming, and then continuously reproducing a particular portion in a shot of the scene to be reproduced or partially reproducing the same by a skipping technique.

## Description

### BACKGROUND OF THE INVENTION

### 1. Field of the Invention

The present invention relates to a system for searching and browsing multimedia, and more particularly, to a video skimming system which is capable of briefly understanding the full content of video and rapidly moving to a desired portion based on a meaningful story structure according to the progress of the content of the video among structural information of the video content.

### 2. Description of the Related Art

As mass media has developed and the production of multimedia contents has become easier, the quantity of media received by the general public every day has become enormous. As multimedia contents have become enormous, a request for an automatic system for sorting data desired by a user is generated and the study of methods for complying with this request is being made. Particularly, with the development of digital technology, there is a growing trend in which a video content is stored and distributed in a digital format. When digital broadcasting becomes popular, the digitalization of media will be accelerated.

With such a digital video content, a certain user may wish to view only sports-related news, or another user may wish to view securities-related news. In addition, a certain user may request for viewing only scenes in which a particular person appears in a show program. In order to receive such various kinds of user requests, various studies are being made.

Moreover, a user may request to grasp the full video contents within a limited time. Such a request is accepted by "Highlights". Generally, highlights can be understood as a newly configured content of important scenes from a video content. These includes, for example, "Sports Highlights", "Preview of Movie", "Headline News" and the like. However, in current technologies, it is very difficult to automate the extraction of highlights from a video content. Thus, in most cases, this extraction is dependent upon a manual work. As mentioned above, as the quantity of media has been increased explosively, many human powers are needed to manually provide highlights of every video content, which is almost impossible. Therefore, an automation system is needed in order to allow a user to understand the outline of the content within a short time.

With the development of digital technologies, a key frame is used for use in moving to a desired position in a video content. By using a video summary using the key frame, a user can move to a desired person rapidly. A large number of key frames are needed in order to easily search for a desired portion by using the key frame, but it is difficult to display a large number of key frames in a restricted display space. Thus, the user is requested to perform many selection works. In addition, generally, it is difficult to understand the full content of video by the method using a key frame.

Recently, for searching for a desired scene in a digital video, various video indexing techniques are being studied. For a user wanting only scenes in which a particular person appears, the study of indexing information on the appearance of a person by the process of searching for a scene in which the person appears in a video and recognizing who the person is and the study of extracting principal scenes from a movie or sports and indexing the same are being made. However, the genres of video are very various and data to be indexed are very different by genres. Hence, it is known that it is very difficult to implement an automation system for extracting meaningful information with accuracy of high level by the current techniques.

On the other hand, in digital video, unlike analog video, the degradation of image quality can be prevented when fast wind/fast rewind functions are executed,

As a fast reproduction method generally used in a digital video, a method for increasing a number of frames decoded per unit time and displaying parts thereof, or a method for decoding and displaying frames while skipping a certain portion is used.

However, in the method for increasing the number of frames decoded per unit time, it is disadvantageous in that the maximum speed is affected by the performance of a terminal device. Thus, for the fast wind/fast rewind of a digital video, the method for decoding and displaying frames while skipping a certain portion is used in general. The fast wind/fast rewind technique in the digital video is the most reasonable one of existing techniques for complying with the request of the user wanting to understand the full content within a restricted time or wanting to move to a desired portion. However, predetermined intervals of time are used in skipping a certain portion, and thus there is a disadvantage that the user misses the scene of a desired portion or a less important portion is reproduced relatively often.

### SUMMARY OF THE INVENTION

A video skimming method according to the present invention includes the steps of: recognizing an individual shot section, a physical editing unit, as structural information for a video stream by shot segmentation; selecting a particular portion in the recognized individual shot section as reproduction video information reflecting the content of the corresponding shot; and continuously reproducing the video information selected for the individual shot.

Here, the video skimming method further includes the shot selection step of determining shots to be reproduced and shots to be skipped after recognizing the individual shot section.

Here, the structural information on the video stream are scene information, i.e., a logical story unit, and shot information, i.e., a physical editing unit displayed together with temporal technical information (starting position and duration or starting position and end position), which further including technical information on shot properties.

Here, in the shot selection step, the effect of repetitively reproducing shots having similar properties is minimized by determining to skip parts of the shots having similar properties and to use only the remaining shots for skimming.

Here, in selecting shots to be reproduced from the similar shots, shots to be used for skimming are selected by giving a higher weight value for selection to shots located at the latter half of a scene.

Here, as a reproduction portion (segment) representative of each shot, the front portion, rear portion and center portion of the corresponding shot or the front portion and rear portion thereof are used at the same time. The length of the reproduction portion (segment) representative of each shot is identical.

Here, if the length of the segment selected as the reproduction portion in each shot is larger than the length of the corresponding shot, the length of the reproduction portion in the individual shot is reduced to below the length of the corresponding shot.

Here, based on the average value of the image/motion/audio similarities in the individual shot, the length of the reproduction portion (segment) representative of each shot is reduced if there is a high similarity, or the reproduction length is increased if there is a low similarity.

Then, the image/motion/audio similarities in the shot representative of the scene mean the similarity in frames, motion vectors and audio data with different time positions.

Here, the reproduction speed of segments to be reproduced in each shot is controlled variably.

Here, the reproduction section is reproduced at a high speed by increasing a number of frames to be decoded per unit time and then making the reproduction speed higher than a normal speed, or by skipping a few frames in the middle without decoding all frames in the reproduction section.

Here, when the high speed skimming method using skipping is adapted to a video stream using a coding scheme utilizing interframe compression such as MPEG, decoding frames are I frames which can obtain frame data by decoding only the corresponding frame without decoding other frames.

In addition, a video skimming apparatus according to the present invention includes: a user interface unit for inputting a user command for video skimming in order to search and browse digital video data as multimedia data; a control unit for skimming the corresponding video file based on structural information for video content according to the user command inputted from the user interface unit; a video information file for providing the structural information for the video content to the control unit as index information for the digital video data and the corresponding video; and a display unit for reproducing the video skimmed by the control unit.

Here, the structural information for the video content includes shots representative of the corresponding scene, a logical story unit, that are based on scene information and are reproduced from shot information, a physical editing unit which is an element of the scene.

Here, the structural information for the video content further includes segments to be reproduced in the shot representative of the corresponding scene.

Here, the user interface unit includes a unit for designating a summary level as a degree of video skimming or a unit for designating the speed of a reproduction section in video skimming in order to select the summary level or reproduction speed of video in video skimming.

Here, the control unit reads video index information related on shot segmentation information and shot clustering information from the index file according to a skimming condition by using a user input or basic settings, calculates segments to be reproduced conforming to the video skimming condition, reproduces the corresponding segments from the related media file continuously, and outputs the same to the display unit.

### BRIEF DESCRIPTION OF THE DRAWINGS

The above objects, features and advantages of the present invention will become more apparent from the following detailed description when taken in conjunction with the accompanying drawings, in which:
Figure 1 is a view explaining the concept of shot segmentation and clustering;
Figure 2 is a view explaining the concept of a video skimming method using shot segmentation information;
Figure 3 is a view illustrating an example of a method of transition of shots of an interactive scene;
Figure 4 is a view illustrating an example of a scene detection method using shot properties;
Figure 5 is a view illustrating an example of a method for selecting shots to be reproduced and shots to be skipped in skimming using structural information;
Figure 6 is a view explaining a method for selecting shots to be reproduced and shots to be skipped in consideration of the location of shots in a scene and repetitive information;
Figure 7 is a view explaining a method for selecting a portion to be skipped and a portion to be reproduced in a shot;
Figure 8 is a view illustrating a method for selecting a dynamic unit reproduction length using the dissimilarity of a shot;
Figure 9 is a view explaining a quick skimming method using skipping;
Figure 10 is a view explaining a skimming method using structural information of video content; and
Figure 11 is a view illustrating one example of the configuration of a system for video skimming using structural information of video content.

### DETAILED DESCRIPTION OF THE PREFERRED EMBODIMENT

With the development of digital video techniques and image/video recognition techniques, users has become to search/filter and browse only a desired portion of a desire video at a desired point of time.

The most basic techniques for non-linear video browsing and searching are the shot segmentation technique and the shot clustering technique. These two techniques are the most essential ones for analyzing video. Therefore, many studies have been concentrated on shot segmentation up to now, and the study of the shot clustering technique is being started.

Based on the results of various studies, the shot segmentation can be automated, and most algorithms can be implemented with a high accuracy of more than 90%.

In addition, the shot clustering also can be automated with accuracy of high level by applying the technique conforming to the genre of a program by detecting a characteristic event or using general characteristics of shots.

Generally, a video contents is logically segmented into a several number of story units. Such a unit of a story structure is generally referred to as an event or scene, which including a gunfight scene, an interactive scene, etc. Such a scene is constructed a sequence of sub-scenes or shots.

A shot denotes a sequence of video frames obtained from one camera without interruption, which is the most basic unit in video analysis or construction.

Generally, a video is constructed of a sequence of many shots. Shot segmentation denotes a method for segmenting video into individual shots. Shot clustering denotes a process for detecting a logical story structure of a video content by reconstructing shots in logical scene units based on each of the individual shots and the characteristics thereof.

The thusly configured video skimming system using scene and shot information, i.e., structural information of video content according to the present invention will now be described with reference to the accompanying drawings.

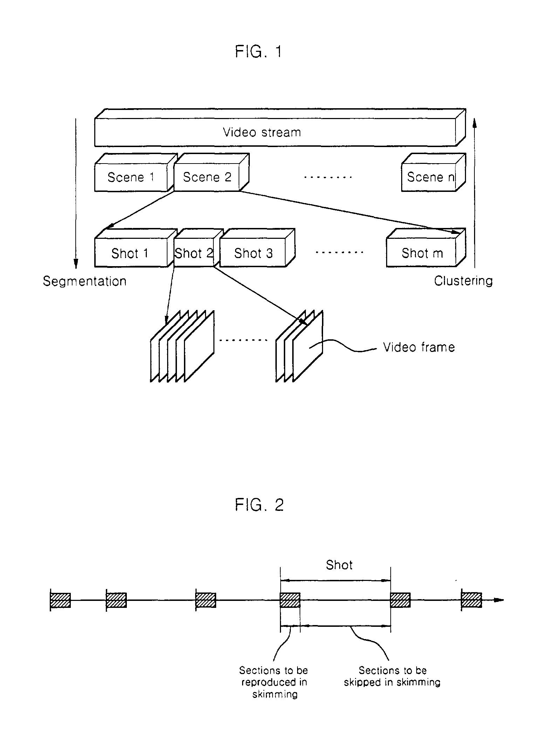

Figure 1 is a view illustrating a shot segmentation process and a shot clustering process. Generally, most shot segmentation algorithms are based on the feature that image/motion/audio similarity is present in the same shots and the image/motion/audio dissimilarity is found between two different shots, and most shot clustering algorithms are based on the feature that shots having similar characteristics are detected again within a predetermined time.

Generally, video highlights are a method for selecting meaningful segments in the progress of the content of a video stream and continuously reproducing these segments.

However, it is very difficult to automate the selection of meaningful segments in the progress of various video contents.

Nevertheless, if shot segmentation information is used for video skimming, it is possible to implement a skimming method for reproducing only a certain portion of each of shots existing in every video and reproducing the remaining portion at a length smaller than that of the original stream by skipping. Such a skimming method is advantageous in that a complete automation system can be constructed since the shot segmentation technique can be automated, and in that the problem of reproducing an unimportant scene at a large length or missing an important scene generated in the fast wind/fast rewind for general digital video can be reduced.

Figure 2 is a view of a summary of a video skimming method using shot segmentation information.

A portion shown in gray in Figure 2 indicates a portion to be reproduced in the skimming method using shot segmentation information, and the remaining portion indicates a portion to be skipped.

However, in the case that only the shot segmentation information is used in video skimming, scene information, which is a logical story structure existing in video content, is not used, and therefore repetitive shots continue to be played in a particular event section such as an interactive scene.

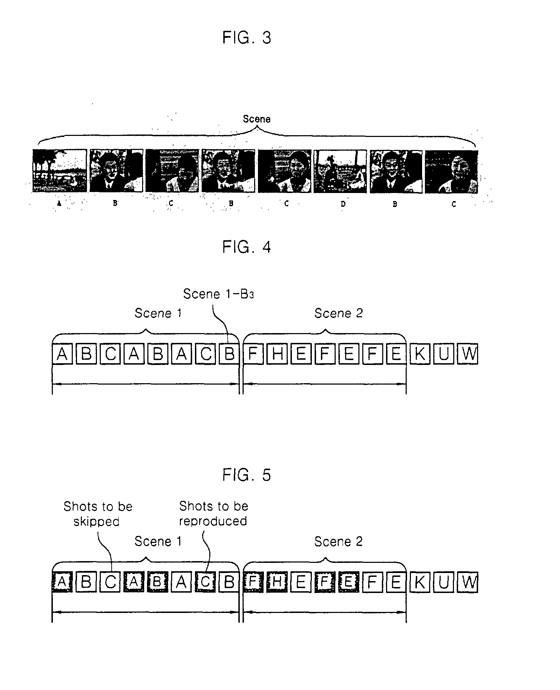

Figure 3 is a view illustrating an array structure of shots in a long interactive scene. In Figure 3, the shots each are represented as English capital letters (A, B, C, D) based on shot properties detected by the shot segmentation process.

In other words, the interactive scene represented in Figure 3 is a scene in which character 1 and character 2 are viewed in close-up in turns, which being constructed of many shots.

However, if the only shot segmentation information is used in video skimming, every certain portion of each of the shots in the interactive scene is reproduced. Therefore, there is a disadvantage that this scene is reproduced for a long time though no other additional information excepting the information that two persons talk can be provided to a user.

In the present invention, the above-mentioned disadvantage is overcome by performing video skimming in consideration of shot information as well as scene information as structural information of a video content.

In other words, in the present invention, there is suggested a skimming method and apparatus for picking out shots to be reproduced and shots to be skipped from shots of each scene existing in every video, reproducing only a certain portion (segment) from segment information constituting the shot to be reproduced and reproducing the remaining portion at a length smaller than that of the original video stream by skipping.

As the results of various studies, it is known that a scene of content such as a movie or drama can be detected dependent upon the fact that a particular event such as a gunfight scene, interactive scene, etc. can be detected, and thusly an index structure of a ToC(Table of Content) format can be automatically generated.

Figure 4 is a view illustrating a process of detecting a story unit for a general video content.

Each shot is represented as an English capital letter based on shot properties detected by the shot segmentation process like Figure 3. In a shot transition structure in an interactive scene of a drama or movie, in most cases, a feature pattern of shots such as A, B, A, B, ... is shown. Figure 4 shows the process of determining the corresponding section as one scene if shots having similar properties are detected within a predetermined period of time. In Figure 4, scene 1 consists of shots having a feature value of A, B, C. Shots having a feature value of A, B, C do not exist for a predetermined time since shot1-B3, and thus a scene is detected by detecting the finish point of time of shot1-B3 to be the finish point of time of scene 1. In Figure 4, scene 2 consists of shots having a feature value of F, H, E. The feature values F, H, E of the shots do not exist for a predetermined time since the last shot of this scene, and thus the finish point of time of scene 2 can be detected.

Besides this method, it is possible to detect a more accurate interactive scene by the process of face detection and face recognition. Such a method is usually adapted to general dramas or movies.

As described above, the present invention implements video skimming by using scene and shot information which are structural information for video content, and considers how to select a shot to be reproduced from shots of a scene, how to select a portion to be reproduced and a portion to be skipped from the shot selected as the shot to be reproduced, how to select a reproduction length of the portion to be reproduced and how to reproduce in a reproduction section.

Firstly, Figure 5 is a view illustrating a summary of the video skimming method of the present invention.

In Figure 5, structural information of video content indexed by the shot segmentation process and the shot clustering process is used. In Figure 5, shots selected for reproduction in video skimming using structural information are indicated in gray and shots to be skipped are indicated in white. That is, for the video skimming using structural information, a system firstly determines shots to be reproduced for each scene and determines method for reproducing the individual shot.

Figure 5 is an example of reproducing only a remarkable scene only once among similar shots so that repetitive shots among shots of scene 1 cannot be reproduced.

In the present invention, the shot selection for determining shots to be reproduced and shots to be skipped among shots of each scene exiting in a video stream will be achieved as follows.

In a method for selecting a representative shot if many shots having similar properties exist in one scene, the outline of the content of the scene can be delivered by selecting the representative shot and using the same in skimming without any particular weight conditions. However, in the story structure such as general dramas and movies, much more information is expressed in the latter half of one scene. In other words, the introduction part is usually less important than the conclusion part. Therefore, in the step of selecting shots to be reproduced in skimming when similar shots appear many times in the scene, much more information can be provided to a user by selecting shots in the latter half of the scene as shots to be reproduced.

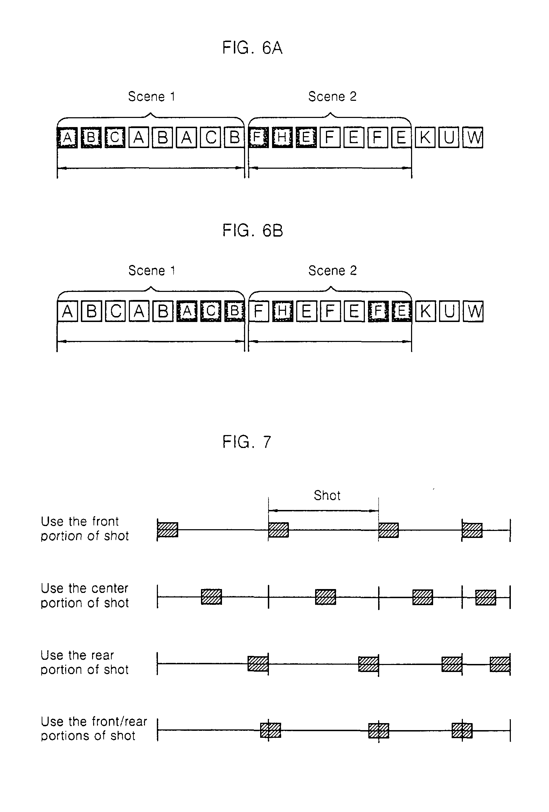

Figure 6 illustrates a method (a of Figure 6) for selecting shots to be reproduced in the former half of a scene and a method (b of figure 6) for selecting shots to be reproduced in the latter half of the scene.

Both a and b of Figure 6 are examples of selecting only one shot for skimming if similar shots exist in one scene. In a of Figure 6, shots appearing at the very beginning are selected as shots to be reproduced among shots having shot properties of A, B, C. In b of Figure 6, shots appearing at the very last are selected as shots to be reproduced among shots having shot properties of A, B, C. Generally, the method of b of Figure 6 shows a higher user's satisfaction than the method of a of Figure 6.

Next, the method for selecting a portion to be reproduced and a portion to be skipped in each shot will now be described.

In skimming using structural information of video content, the summary of the video content can be provided by continuously reproducing the shots selected above. However, the video skimming method of playing the full shot provides a summary of a very low level in general. Usually, a user can understand the content of the full shot by viewing only parts of the shot. In the method for selecting a portion to be reproduced from the shot selected for reproduction in video skimming using structural information of video content, the front portion, rear portion or center portion of the shot can be selected unconditionally. Figure 7 is a view illustrating a portion to be skipped and a portion to be reproduced in the method for video skimming using the front, rear and center portions or the front/rear portions of a shot at the same time.

As the result of a test, it is found that a higher user's satisfaction is achieved by skipping the front portion of the corresponding shot and reproducing the rear portion thereof, though it is different according to the genre of video. The reasons of which are because the conclusion part (e.g., a goal scene in a soccer game) of the shot is more important than the introduction part or development part when understanding the content of the shot, and because parts of the content are expressed in the former half of the shot and the full content is expressed in the latter half if a method such as a stepwise chart explanation is sued in a program like news.

However, the front portion of the shot may be important according to the genre of video, for example, educational broadcasting mainly for solving questions.

In such a broadcasting program, the information on what questions are dealt with is present at the front portion of the shot, and then the work of solving questions is continued since the front portion. Thus, in order to reproduce a desired portion, much more information can be provided to a user by reproducing the front portion of the shot, rather than by reproducing the rear portion.

Therefore, in the present invention, the position to be reproduced in the shot can be selected differently according to the characteristics of the content of video, and skimming can be implemented by using the front portion, the center portion and the rear portion in combination with one another in the same shot.

Next, the method for selecting a reproduction length according to the present invention will now be described.

The method for selecting a reproduction length in each shot can be divided into the method for selecting segments of the same length as a portion to be reproduced for every selected shots and the method for selecting a different reproduction length for each shot by using a shot property.

At this time, the above-used shot property is based on the average image/motion/audio similarities in one shot. That is, it can be judged that the larger the image/motion/audio similarities in one shot are, the more monotonous the scene is. IN such a scene, skipping is performed more often. On the contrary, it can be judged that the smaller the image/motion/audio similarities in the shot are, the more complicated the content of the scene is. In such a scene, the length of a unit segment to be reproduced can be adjusted dynamically by using the method for performing skipping less often.

This method is a method for skipping a portion with much information less often and skipping a portion with a little information more often without depending upon the time length of the shot. By this method, video skimming with a user's comprehensibility of a high level can be provided as compared to the method for reproducing segments of the same length for every selected shots.

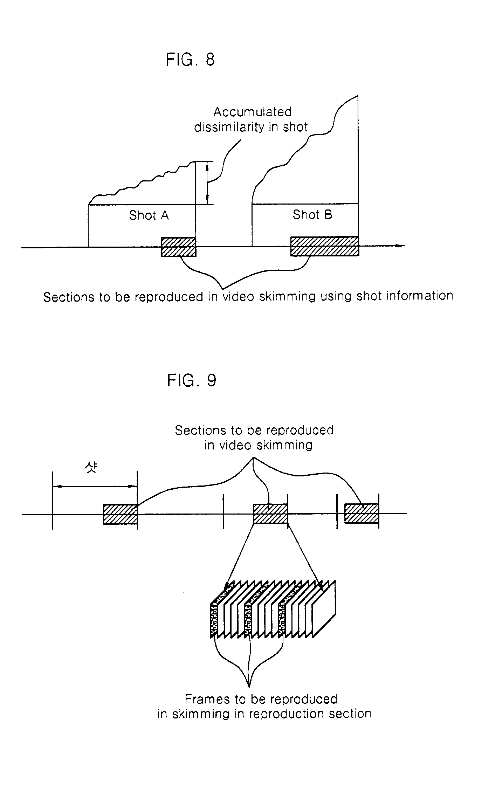

Figure 8 is a view illustrating an example of a method for selecting a length to be reproduced and skipped based on image/motion/audio similarities in a shot.

In a graph of Figure 8, a horizontal axis indicates time and a longitudinal axis indicates an accumulated value of image/motion/audio dissimilarities in the shot. These dissimilarity data are data representing shot properties extractable from a shot segmentation algorithm in general.

As an example of dissimilarity, the difference in a color histogram variance between adjacent frames or between frames at predetermined intervals can be taken.

In Figure 8, since the average rate of change of shot A is larger than that of shot B, though both shot A and shot B have a similar length, the circumstance in which more portions are reproduced in shot B than shot A is shown.

In this way, unless the length of a shot is considered in setting a reproduction section, an error situation in which the length of a reproduction section becomes larger than that of the corresponding shot may occur (if the shot is very short). Hence, in the skimming method of the present invention, in the case that the length of a unit section becomes larger than that of the corresponding shot, exceptionally, the full corresponding shot may be selected as a reproduction section or parts thereof may be selected as a reproduction section in consideration of the length of the corresponding shot.

Next, the method for reproducing a scene and a reproduction section in a shot to be reproduced in the scene as structural information for video content will be explained.

The video skimming method according to the present invention can be adapted to a backward direction as well as a forward direction.

When segments selected as reproduction sections in each shot are continuously reproduced, a user can understand the full content and obtain outline information on content in a short time. Besides, any interference is not required for searching a desired position.

In the video skimming method of the present invention, the method for reproducing segments selected as reproduction sections in each shot can be divided into two.

A first method is one for reproducing each segment, which is the same as a normal reproducing method. A second method is one for decoding parts of frames in a reproduction section and reproducing the same in the section by using skipping.

The normal reproducing method is very common, so a detailed description thereof will be omitted. The method for decoding parts of frames in a reproduction section and reproducing the same in the section by using skipping will now be described.

The method for decoding parts of frames in a reproduction section and reproducing the same in the section by using skipping is a method for implementing quick skimming. At this time, frames to be displayed can be designated as frames at predetermined intervals of time. In the method using interframe compression such as MPEG, I frames having no interframe independency can be designated.

Figure 9 is a view illustrating an example of a quick skimming method using skipping in a reproduction section. By using this method, a user can experience the effect of obtaining much information and reproducing a video file at a high speed.

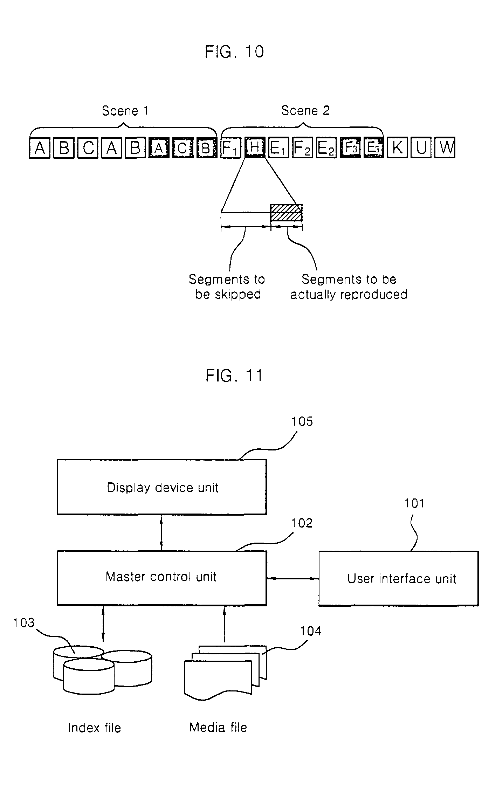

As explained above, in the video skimming method using structural information of video content of the present invention, segments are designated by two steps. Figure 10 is a view illustrating a summary of the video skimming method using structural information of video content according to the present invention.

When video skimming is requested, the system loads an index file storing structural information of video content including shot and scene information on the video content. The system determines what shots to reproduce for each scene and what shots to skip (in the shot selection step), and determines segments to be reproduced and segments to be skipped for each scene selected for video skimming (in the segment designation step). Through the two determination steps, segments to be reproduced are continuously outputted to a reproducing apparatus.

Figure 10 is a view illustrating shots to be reproduced by the shot selection step shown in gray, in which only parts (segments) of a selected shot can be reproduced and the remaining portion can be skipped.

Figure 11 is a view illustrating a skimming apparatus for video skimming according to one embodiment of the present invention.

As illustrated in Figure 11, the video skimming apparatus of the present invention includes a user interface unit 101 for inputting a user command such as a degree of video skimming and a speed to be used in skimming, a master control unit 102 for skimming a corresponding video file based on indexing information on shots and scenes according to the user command inputted into the user interface unit 101, a media file 103 for providing digital video stream information to the master control unit 102, an index file 104 for providing the indexing information on shots and scenes as structural information corresponding to the media file, and a display device unit 105 for reproducing the video skimmed by the master control unit 102.

In the video skimming system of the present invention of Figure 11, the index file 104 can be included in the medial file 103. The display device unit 105 is an output device for displaying a video stream including a monitor, a speaker, etc. The user interface unit 101 is an inputting means for receiving an input of a user including a keyboard, a mouse, a remote control, buttons, etc.

The media file 103 is a file storing video (audio) data, and the index file 104 is a file storing index information on video containing shot clustering information and shot segmentation information.

The user requests for video skimming by using the user interface unit 101.

When the video skimming is requested, a summary level (degree of skimming) can be designated and also a speed to be used in skimming can be designated. That is, the user designates how many minutes it takes to compress the full video for viewing by using the user interface unit 101. The master control unit 102 determines what portion of what shot will be reproduced for skimming based on the medial file 103 and the subsequent information of the index file 102 according to the input of the user and determines at what speed each segment will be reproduced. By completing this process, the master control unit 102 can provides a video skimming function to the user by decoding the media file 103 and displaying the corresponding frames on the display device unit 105.

As described above, the present invention has disclosed a video skimming method for simultaneously complying with a user request for understanding the full content and moving to a desired position within a restricted time under a digital video environment.

In the present invention, the possibility of reproducing a less important portion relatively often or missing an actually desired scene is minimized and the possibility of repetitively reproducing an interactive scene or a particular scene in turns is minimized, which are the problems that can occur to the existing video skimming method.

The video skimming method of the present invention is a method for minimizing the necessity of a user input according to a user request for moving to a desired position.

By using the video skimming function of the present invention, the user can understand the full content within a short time, cannot miss an important portion in understanding the full content, and can skip a boring portion easily.

In addition, the user can use the video skimming method of the present invention when he or she wants to move to a desired position. This method is advantageous in that it requires less user input requests as compared to the method using key frames.

In conclusion, the present invention can be employed, for instance, for use in reproducing video highlights, and can be utilized as a function of rapidly searching a desired scene while minimizing a user input request if it is used together with a high speed reproducing method in reproducing reproduction sections of each shot.

## Claims

1. A video skimming method, comprising the steps of:
recognizing an individual shot section, a physical editing unit, as structural information for a video stream by shot segmentation;
selecting a particular portion in the recognized individual shot section as reproduction video information reflecting the content of the corresponding shot; and
continuously reproducing the video information selected for the individual shot.

2. The method of claim 1, wherein the video skimming method further includes the shot selection step of determining shots to be reproduced and shots to be skipped after recognizing the individual shot section.

3. The method of claim 1, wherein the structural information on the video stream are scene information, i.e., a logical story unit, and shot information, i.e., a physical editing unit displayed together with temporal technical information (starting position and duration or starting position and end position), which further including technical information on shot properties.

4. The method of claim 2, wherein, in the shot selection step, the effect of repetitively reproducing shots having similar properties is minimized by determining to skip parts of the shots having similar properties and to use only the remaining shots for skimming.

5. The method of claim 4, wherein, in selecting shots to be reproduced from the similar shots, shots to be used for skimming are selected by giving a higher weight value for selection to shots located at the latter half of a scene.

6. The method of claim 1, wherein, as a reproduction portion (segment) representative of each shot, the front portion, rear portion and center portion of the corresponding shot or the front portion and rear portion thereof are used at the same time.

7. The method of claim 1, wherein the length of the reproduction portion (segment) representative of each shot is identical.

8. The method of claim 7, wherein, if the length of the segment selected as the reproduction portion in each shot is larger than the length of the corresponding shot, the length of the reproduction portion in the individual shot is reduced to below the length of the corresponding shot.

9. The method of claim 1, wherein, based on the average value of the image/motion/audio similarities in the individual shot, the length of the reproduction portion (segment) representative of each shot is reduced if there is a high similarity, or the reproduction length is increased if there is a low similarity.

10. The method of claim 8, wherein the image/motion/audio similarities in the shot representative of the scene mean the similarity in frames, motion vectors and audio data with different time positions.

11. The method of claim 9, wherein if the length of the segment selected as the reproduction portion in each shot is larger than the length of the corresponding shot, the length of the reproduction portion in the individual shot is reduced to below the length of the corresponding shot.

12. The method of claim 1, wherein the reproduction speed of segments to be reproduced in each shot is controlled variably.

13. The method of claim 12, wherein the reproduction section is reproduced at a high speed by increasing a number of frames to be decoded per unit time and then making the reproduction speed higher than a normal speed.

14. The method of claim 13, wherein the reproduction section is reproduced at a high speed by skipping a few frames in the middle without decoding all frames in the reproduction section.

15. The method of claim 14, wherein, when the high speed skimming method using skipping is adapted to a video stream using a coding scheme utilizing interframe compression such as MPEG, decoding frames are I frames which can obtain frame data by decoding only the corresponding frame without decoding other frames.

16. A video skimming apparatus, comprising:
a user interface unit for inputting a user command for video skimming in order to search and browse digital video data as multimedia data;
a control unit for skimming the corresponding video file based on structural information for video content according to the user command inputted from the user interface unit;
a video information file for providing the structural information for the video content to the control unit as index information for the digital video data and the corresponding video; and
a display unit for reproducing the video skimmed by the control unit.

17. The apparatus of claim 16, wherein the structural information for the video content includes shots representative of the corresponding scene, a logical story unit, that are based on scene information and are reproduced from shot information, a physical editing unit which is an element of the scene.

18. The apparatus of claim 17, wherein the structural information for the video content further includes segments to be reproduced in the shot representative of the corresponding scene.

19. The apparatus of claim 16, wherein, the user interface unit comprises a unit for designating a summary level as a degree of video skimming or a unit for designating the speed of a reproduction section in video skimming in order to select the summary level or reproduction speed of video in video skimming.

20. The apparatus of claim 16, wherein the control unit reads video index information related on shot segmentation information and shot clustering information from the index file according to a skimming condition by using a user input or basic settings, calculates segments to be reproduced conforming to the video skimming condition, reproduces the corresponding segments from the related media file continuously, and outputs the same to the display unit.

21. A video skimming apparatus, comprising:
a storage unit for storing digital video data, scene information which is logical story unit of a video content and shot information which is a physical editing unit of a video content;
a detection unit for detecting shot information representative of a particular scene based on the scene information corresponding to the video data for video skimming;
a selection unit for selecting segments to be reproduced and segments to be skipped in the detected shot; and
a reproduction unit for continuously reading the selected segments to be reproduced from the storage unit and reproducing the same.
